(19) **Europäisches Patentamt / European Patent Office / Office européen des brevets**

(11) **EP 2 853 628 A1**

(12) **EUROPEAN PATENT APPLICATION**
published in accordance with Art. 153(4) EPC

(43) Date of publication:
01.04.2015 Bulletin 2015/14

(51) Int Cl.:
*D04H 1/4374* (2012.01)    *A47C 7/20* (2006.01)
*B32B 5/26* (2006.01)    *B32B 27/36* (2006.01)
*B60N 2/44* (2006.01)    *D04H 1/435* (2012.01)
*D04H 1/498* (2012.01)    *D04H 3/011* (2012.01)

(21) Application number: 13793448.5

(22) Date of filing: 22.05.2013

(86) International application number:
PCT/JP2013/064204

(87) International publication number:
WO 2013/176176 (28.11.2013 Gazette 2013/48)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 22.05.2012 JP 2012116870

(71) Applicant: **Mitsui Chemicals, Inc.**
**Tokyo 105-7117 (JP)**

(72) Inventor: **ICHIKAWA, Taro**
**Sodegaura-shi**
**Chiba 299-0265 (JP)**

(74) Representative: **Hoffmann Eitle**
**Patent- und Rechtsanwälte PartmbB**
**Arabellastraße 30**
**81925 München (DE)**

(54) **NONWOVEN FABRIC LAMINATE FOR FOAM MOLDING, COMPLEX OF URETHANE FOAM-MOLDED BODY USING SAID NONWOVEN FABRIC LAMINATE, AND METHOD FOR MANUFACTURING NONWOVEN FABRIC LAMINATE FOR FOAM MOLDING**

(57)    [Solution]
A nonwoven fabric laminate for foam molding of the invention includes a reinforcing layer on at least one side of a dense layer. The dense layer is a nonwoven fabric including polyester continuous fibers with a fiber diameter of 10 to 30 $\mu$m and having a bulk density of not less than 0.1 g/cm$^3$, the fibers being fusion bonded together by a hot air treatment. The reinforcing layer is a nonwoven fabric including polyester staple fibers with a fiber diameter of 10 to 30 $\mu$m. The dense layer and the reinforcing layer are stacked and interlocked with each other by needle punching.

[Effects]
The nonwoven fabric laminates for foam molding of the invention can maintain denseness in the sheets even after being heated, spread and compressed. The nonwoven fabrics display excellent conformability to the shape of a mold during a shaping process involving heating, spreading and compressing and thus can be formed into complicated shapes. The nonwoven fabric laminates can be advantageously formed into shapes conforming to the shapes of foaming molds or other devices without the need of cutting, and further can maintain sufficient denseness throughout the laminates.

EP 2 853 628 A1

**Description**

TECHNICAL FIELD

The present invention relates to nonwoven fabric laminates for use in foam molding which are disposed at the bottom of foams such as polyurethane foams, to urethane foam molding composites including the nonwoven fabric laminates, and to methods for manufacturing nonwoven fabric laminates for foam molding.

BACKGROUND ART

Form moldings such as flexible polyurethane foams are used as cushioning materials in parts such as vehicle seats. Reinforcing fabrics are disposed at the bottom of these foams in order to increase the rigidity of the urethane foams and to prevent the exudation of urethane to the backside. A combination of victoria lawn (cheesecloth) and slab urethane, or a worsted fabric is used as the reinforcing fabric. However, such reinforcing fabrics have drawbacks in that the improvement in the rigidity of urethane foams is insufficient as well as that urethane is not sufficiently prevented from exuding to the backside.

To remedy such defects, various methods have been proposed. One method utilizes a reinforcing fabric which is a unit of nonwoven fabrics composed of a thin and dense layer with a basis weight of 10 to 30 g/m$^2$ and a rough and bulky layer with a basis weight of 40 to 100 g/m$^2$ (see Patent Literature 1). Alternatively, a high-basis weight nonwoven fabric is used which has a basis weight of 110 to 800 g/m$^2$ and a fiber diameter of 1 to 16 d (see Patent Literature 2), or a meltblown nonwoven fabric is used as a dense layer which has a fiber diameter of not more than 10 $\mu$m (see Patent Literature 3). Still alternatively, a nonwoven fabric is used in which a web (a dense layer) of fibers with a fineness of 1.1 to 2.7 dtex and a web (a bulky layer) of fibers with a fineness of 2.3 to 8.8 dtex are stacked one on top of the other via mechanical interlocks (see Patent Literature 4). In another method, a staple (discontinuous) fiber layer is stacked on at least one side of a fibrous substrate layer such as a spunbonded nonwoven fabric and these layers are joined together by the action of high-pressure water jet to give a foam-reinforcing material (see Patent Literature 5).

However, the foam-reinforcing fabrics described in Patent Literatures 1 to 5 are all directed to the prevention of exudation or impregnation during urethane foaming and are not configured to save manual labor in cutting and sewing prior to foam molding.

As vehicle seats become more advanced in design and involve more electronic components in recent years, the shapes of metal molds used in urethane foam molding have become complicated. The need to conform to such complicated shapes entails a lot of labor in manually cutting and sewing the reinforcing fabrics. To save the labor, a shaping method for a simple treatment before foam molding is proposed in which a nonwoven fabric sheet is caused to cover a mold, then heated and locally spread or compressed to conform to the shape of the mold. An example of the reinforcing fabrics used in this shaping method is a nonwoven fabric sheet including a mixture of low-melting-point fibers and high-melting-point fibers(see Patent Literature 6). Further, it is proposed that a nonwoven fabric based on crimped conjugate staple fibers including high-melting-point and low-melting-point polyester resin components be used as a urethane reinforcing material to eliminate the need of a cutting process as well as to prevent the exudation of urethane foams during the expansion of urethane foams (see Patent Literature 7).

The nonwoven fabrics obtained according to the techniques of Patent Literatures 6 and 7 are improved in the conformability to the shapes of molds and allow the sewing labor to be saved. However, because following the shape of a mold causes a nonwoven fabric of staple fibers to be stretched, the nonwoven fabric loses sufficient denseness and becomes extremely thin locally. When such nonwoven fabrics are subjected to the subsequent urethane foam molding step, the urethane exudes to the backside through such thin portions to possibly cause problems such as low reinforcing effects and the occurrence of noise between the urethane and metal springs.

CITATION LIST

PATENT LITERATURE

Patent Literature 1: JP-Y-S62-26193
Patent Literature 2: JP-A-H02-258332
Patent Literature 3: JP-A-2004-353153
Patent Literature 4: JP-A-2007-146356
Patent Literature 5: JP-A-2005-212202
Patent Literature 6: JP-A-2006-281768

Patent Literature 7: JP-A-2010-174393

SUMMARY OF INVENTION

TECHNICAL PROBLEM

It is an object of the invention to provide laminates for use in foam molding which exhibit excellent conformability to the shape of a mold during a shaping process involving heating, spreading and compressing and can maintain sufficient reinforcing effects and urethane exudation preventing performance after being shaped to the mold, and to provide urethane foam molding composites including the laminates.

SOLUTION TO PROBLEM

A nonwoven fabric laminate for foam molding according to the present invention includes
a reinforcing layer on at least one side of a dense layer,
the dense layer being a nonwoven fabric including polyester continuous fibers with a fiber diameter of 10 to 30 $\mu$m and having a bulk density of not less than 0.1 g/cm$^3$, the fibers being fusion bonded together by a hot air treatment,
the reinforcing layer being a nonwoven fabric including polyester staple fibers with a fiber diameter of 10 to 30 $\mu$m,
the dense layer and the reinforcing layer being interlocked with each other by needle punching.
In the nonwoven fabric laminate for foam molding according to the invention, the dense layer is preferably free of partially thermocompression bonded portions.
In the nonwoven fabric laminate for foam molding according to the invention, the permeability at a pressure difference of 125 Pa is preferably from 25 cm$^3$/cm$^2$/sec to less than 140 cm$^3$/cm$^2$/sec.
In the nonwoven fabric laminate for foam molding according to the invention, the polyester continuous fibers of the dense layer and/or the polyester staple fibers of the reinforcing layer preferably include fibers having cross sectional portions with different melting points. In such a nonwoven fabric laminate for foam molding according to the invention, it is preferable that the polyester continuous fibers of the dense layer include conjugate continuous fibers including two or more kinds of resins with different melting points, and at least one of the resins forming the conjugate continuous fibers be a polyester resin. In the nonwoven fabric laminate for foam molding according to the invention, it is preferable that the polyester staple fibers of the reinforcing layer include conjugate staple fibers including two or more kinds of resins with different melting points, and at least one of the resins forming the conjugate staple fibers be a polyester resin, and more preferably at least one of the resins forming the conjugate staple fibers have a melting point in the range of 110 to 190°C.
In the nonwoven fabric laminate for foam molding according to the invention, it is preferable that the basis weight of the dense layer be in the range of 10 to 50 g/m$^2$, the basis weight of the reinforcing layer be in the range of 40 to 150 g/m$^2$, and further the basis weight of the nonwoven fabric laminate for foam molding be in the range of 50 to 200 g/m$^2$.
A urethane foam molding composite according to the present invention includes any of the inventive nonwoven fabric laminates for foam molding described above, and a urethane foam molding joined therewith via the reinforcing layer.
A vehicle seat and a chair according to the present invention include the inventive urethane foam molding composite.
A method for manufacturing nonwoven fabric laminates for foam molding according to the present invention includes
a step of obtaining by a hot air treatment a nonwoven fabric including polyester continuous fibers with a fiber diameter of 10 to 30 $\mu$m and having a bulk density of not less than 0.1 g/cm$^3$, and
a step of stacking the nonwoven fabric with a nonwoven fabric including polyester staple fibers with a fiber diameter of 10 to 30 $\mu$m, and interlocking these layers with each other by needle punching.
In the method for manufacturing nonwoven fabric laminates for foam molding according to the invention, it is preferable that the polyester continuous fibers include conjugate continuous fibers including two or more kinds of resins with different melting points, and at least one of the resins forming the conjugate continuous fibers be a polyester resin.

ADVANTAGEOUS EFFECTS OF INVENTION

In the nonwoven fabric laminates for foam molding according to the invention, the dense layer which is a nonwoven fabric including specific polyester continuous fibers and the reinforcing layer which is a nonwoven fabric including specific polyester staple fibers are stacked one on top of the other with interlocks. According to this configuration, the laminates exhibit excellent heat resistance and can maintain denseness in the sheets even after being heated, spread and compressed. Further, such nonwoven fabrics display excellent conformability to the shape of a mold during a shaping process involving heating, spreading and compressing and thus can be formed into complicated shapes. That is, the inventive nonwoven fabric laminates can be advantageously formed into shapes conforming to the shapes of foaming molds or other devices without the need of cutting or while saving the labor associated with cutting, and further can maintain sufficient denseness throughout the laminates.

Materials such as urethanes can be foamed on the inventive nonwoven fabric laminates for foam molding while advantageously preventing the penetration (oozing or exudation) of the foaming resin liquids.

Further, urethane foam molding composites can be produced using the inventive nonwoven fabric laminates for foam molding. In such cases, the laminates advantageously conform to the desired shape of a metal mold and urethane foams can be advantageously produced on the laminates without any exudation of the urethane resins.

The urethane foam molding composites of the invention are free from exudation of urethane resins on the nonwoven fabric laminates as substrate fabrics. Thus, the use of such composites in, for example, the production of automobile seats makes it possible to effectively prevent the occurrence of noise by the friction between the urethane foams and metal parts.

According to the manufacturing methods of the invention, nonwoven fabric laminates for foam molding having the aforementioned excellent characteristics can be produced in an advantageous manner.

DESCRIPTION OF EMBODIMENTS

The present invention will be described in detail hereinbelow.

(Nonwoven fabric laminates for foam molding)

A nonwoven fabric laminate for foam molding according to the invention has a reinforcing layer on at least one side of a dense layer.

The dense layer in the invention is a nonwoven fabric including polyester continuous fibers. The reinforcing layer in the invention is a nonwoven fabric including polyester staple fibers. These nonwoven fabrics are common in that they are formed of polyester fibers. In the invention, the term "staple fibers" indicates fibers having an average fiber length of about 200 mm or less.

In the invention, the polyester fibers may be fibers of a single polyester, conjugate fibers formed of two or more kinds of polyesters, or conjugate fibers formed of one or more kinds of polyesters and a thermoplastic resin(s) other than polyesters. The fibers of a single polyester may be homogeneous fibers or may have different melting points with respect to a cross section as a result of having undergone a step such as spinning or subsequent heat setting. The conjugate fibers may have cross sectional portions with different melting points. Further, the polyester fibers may be mixed fibers obtained by mixing two or more kinds of these fibers.

In the invention, it is preferable that the polyester continuous fibers of the dense layer and/or the polyester staple fibers of the reinforcing layer have a melting point in the range of 110 to 190°C, and preferably 110 to 140°C. In the case of conjugate fibers, at least a portion of the polyester fibers desirably satisfies such a melting point. In the invention, it is desirable that the polyester staple fibers of the reinforcing layer be conjugate staple fibers and that at least one resin forming the conjugate staple fibers have a melting point of 110 to 190°C, preferably 110 to 140°C, and particularly preferably 110 to 120°C. When the polyester staple fibers of the reinforcing layer are conjugate staple fibers, the fiber components preferably include copolymerized polyethylene terephthalate or polyethylene.

In the invention, the use of the nonwoven fabrics including polyester fibers is advantageous in terms of heat resistance during a shaping process involving heating, spreading and compressing. According to such use, problems such as deformation during heating can be prevented in contrast to the use of nonwoven fabrics formed of a low-melting-point resin as a single component such as polypropylene resin or polyethylene resin.

Specific examples of the polyesters for forming the polyester fibers include polyethylene terephthalate (PET), polytrimethylene terephthalate (PTT), polybutylene terephthalate (PBT), polylactic acid (PLA), copolymers of these polymers, and combination of these polymers. In view of shaping properties, such polyesters as polyethylene terephthalate (PET), polytrimethylene terephthalate (PTT) and polybutylene terephthalate (PBT) are more preferable.

Known additives may be added to the resins used in the formation of the polyester fibers while still achieving the object of the invention. Examples of such additives include antioxidants, weather stabilizers, light stabilizers, antiblocking agents, lubricants, nucleating agents, pigments, softeners, hydrophilizing agents, auxiliaries, water repellents, fillers, antibacterial agents and flame retardants. These additives may be added to the surface of fibers after the formation of nonwoven fabrics by methods such as spraying.

• Dense layers

The dense layer constituting the inventive nonwoven fabric laminate for foam molding is a nonwoven fabric including the polyester continuous fibers described above. The polyester continuous fibers desirably have a fiber diameter of 10 to 30 $\mu$m, and preferably 15 to 25 $\mu$m. If the fiber diameter exceeds 30 $\mu$m, the denseness of the nonwoven fabric is deteriorated to disadvantageously increase the risk that urethane will exude during urethane foaming. If the fiber diameter is less than 10 $\mu$m, the productivity of the polyester continuous fiber nonwoven fabrics is disadvantageously lowered. The cross sectional shapes of the fibers may be circular shapes and odd-shapes such as three-leaves shapes.

The dense layer in the invention is a nonwoven fabric in which the fibers are fusion bonded together by a hot air treatment and preferably the fibers are fusion bonded together by a treatment with heat such as hot air throughout the entirety of the nonwoven fabric. The nonwoven fabric defining the dense layer is desirably free of partially thermocompression bonded portions. Preferably, thermocompression bonding such as embossing is not performed on the nonwoven fabric.

Known nonwoven fabrics may be used as the polyester continuous fiber nonwoven fabrics. In detail, such nonwoven fabrics may be obtained by spinning a polyester resin and directing the web through a hot air bonder (US 3,384,944, US 3,989,788, and JP-A-2010-537068).

When the nonwoven fabric defining the dense layer is free of partially thermocompression bonded portions, the obtainable nonwoven fabric laminate for foam molding advantageously exhibits excellent conformability to the shape of a mold and thus achieves excellent shaping properties, as well as can maintain sufficient denseness throughout the laminate even after being shaped to the mold.

The dense layer in the invention usually has a basis weight in the range of 10 to 60 g/m$^2$, preferably 10 to 50 g/m$^2$, and more preferably 15 to 45 g/m$^2$.

The polyester continuous fibers forming the nonwoven fabric as the dense layer may be any of fibers of a single polyester, conjugate continuous fibers formed of two or more kinds of polyesters, and conjugate continuous fibers formed of one or more kinds of polyesters and a thermoplastic resin (s) other than polyesters. One or more kinds of these polyester fibers may be used.

In the invention, it is preferable that the polyester continuous fibers forming the nonwoven fabric as the dense layer include conjugate continuous fibers including two or more kinds of resins with different melting points, and at least one of the resins forming the conjugate continuous fibers be a polyester resin. It is also preferable that such polyester continuous fibers have cross sectional portions with different melting points.

Examples of such polyester continuous fiber nonwoven fabrics include "REEMAY (R-2 series)" and "REEMAY (R-0 series)" manufactured by Fiberweb. "REEMAY (R-2 series)" and "REEMAY (R-0 series)" are particularly suited for use as the dense layers in the inventive nonwoven fabric laminates because they are nonwoven fabrics which are composed of polyester conjugate continuous fibers having cross sectional portions with different melting points and in which the fibers are fusion bonded together at portions throughout the entirety of the nonwoven fabrics by hot air bonding.

The bulk density of the dense layer in the invention is preferably equal to or greater than the bulk density of the reinforcing layer, and is usually not less than 0.1 g/cm$^3$, preferably in the range of 0.1 to 0.3 g/cm$^3$, and more preferably 0.1 to 0.2 g/cm$^3$.

The dense layer in the invention may be composed of a single layer of a nonwoven fabric or may be composed of two or more layers of nonwoven fabrics. In the case where the dense layer is composed of two or more layers of nonwoven fabrics, the nonwoven fabrics may be the same or different from one another. Further, such two or more layers of nonwoven fabrics constituting the dense layer may be stacked beforehand and interlocked or bonded together by a known method, or may be stacked during the formation of the nonwoven fabric laminate for foam molding.

• Reinforcing layers

The reinforcing layer constituting the inventive nonwoven fabric laminate for foam molding is a nonwoven fabric including the polyester staple fibers described above. The polyester staple fibers desirably have a fiber diameter of 10 to 30 $\mu$m, and preferably 15 to 25 $\mu$m. The average fiber length is usually not more than 200 mm, preferably in the range of 10 mm to 70 mm, and more preferably 30 to 60 mm. Finer fiber diameters are more preferable because performances are improved in the prevention of urethane oozing or exudation as well as in reinforcement effects. However, the fiber diameters are advantageously controlled to be within the above range from viewpoints such as the productivity during interlocking.

The staple fibers forming the reinforcing layer in the invention may be monofilaments, side-by-side or sheath/core conjugate fibers, or crimped fibers. The cross sectional shape of the fibers may be any of circular shapes and odd-shapes such as V shapes, X shapes and T shapes. In particular, the fibers are preferably composed of two or more components including at least a low-melting resin and a high-melting-point resin in view of the shape retention properties of the nonwoven fabrics after being formed in conformity to the shape of a mold. Specific examples include sheath/core conjugate fibers including a high-melting-point PET resin and a low-melting-point PET resin, and sheath/core conjugate fibers including a high-melting-point PET resin and a PE resin.

The staple fibers forming the reinforcing layer in the invention may be mixed fibers obtained by mixing two or more kinds of fibers. Examples thereof include mixed fibers obtained by mixing fibers of two or more kinds of thermoplastic resins, and mixed fibers obtained by mixing two or more kinds of fibers having different shapes.

In the invention, it is preferable that the polyester staple fibers forming the nonwoven fabric as the reinforcing layer include conjugate staple fibers including two or more kinds of resins with different melting points, and at least one of the resins forming the conjugate staple fibers be a polyester resin. Such polyester staple fibers preferably have cross sectional portions with different melting points.

The staple fibers forming the reinforcing layer in the invention may be selected from mixed fibers including two or more kinds of single-component polyester staple fibers with different melting points. In the case where the nonwoven fabric as the reinforcing layer is formed of conjugate staple fibers, it is desirable that at least one resin constituting the conjugate staple fibers have a melting point preferably in the range of 110 to 190°C, more preferably 110 to 140°C, and most preferably 110 to 120°C. The presence of the resin having a melting point in this range advantageously ensures that the nonwoven fabric laminate achieves excellent shape retention properties after being heated, spread and compressed. Examples of such resins include copolymerized polyethylene terephthalate and polyethylene. In order to control the shape retention properties, the conjugate staple fibers may be mixed together with other staple fibers such as high-melting-point single-component polyester staple fibers. In such mixed fibers, the proportion of the conjugate polyester staple fibers is 10 to 90%, more preferably 20 to 80%, and most preferably 30 to 60%. Any proportion below this range may result in poor shape retention properties. If the proportion exceeds this range, the obtainable nonwoven fabric laminate of course exhibits excellent shape retention properties after being heated, spread and compressed but comes to have a hard texture which can adversely affect anti-noise effects and ride quality.

Stretchable fibers may be selected when an emphasis is placed on the conformability to the shape of a mold during forming. Specific examples include side-by-side conjugate fibers including a high-melting-point PET resin and a low-melting-point PET resin or including a high-viscosity PET resin and a low-viscosity PET resin.

The polyester staple fibers may be formed into nonwoven fabrics according to known methods. A preferred method is mechanical bonding by needle punching, or thermal fusion bonding. When the nonwoven fabric is scheduled to be stacked together with the dense layer by needle punching, the polyester staple fibers are preferably formed into the nonwoven fabric by needle punching.

The bulk density of the reinforcing layer in the invention is preferably equal to or lower than the bulk density of the dense layer. Although not particularly limited thereto, the bulk density is usually in the range of 0.01 to 0.1 $g/cm^3$, preferably 0.03 to 0.09 $g/cm^3$, and more preferably 0.05 to 0.08 $g/cm^3$.

The basis weight of the reinforcing layer in the invention is desirably in the range of 40 to 180 $g/cm^2$, preferably 40 to 160 $g/cm^2$, more preferably 40 to 150 $g/cm^2$, and still more preferably 60 to 150 $g/cm^2$.

The reinforcing layer in the invention may be composed of a single layer, or two or more layers. In the case where the reinforcing layer is a stack of two or more layers, the nonwoven fabrics may be the same or different from one another. Further, such two or more layers of nonwoven fabrics constituting the reinforcing layer may be stacked beforehand and interlocked or bonded together by a known method, or may be stacked during the formation of the nonwoven fabric laminate for foam molding.

As mentioned above, the reinforcing layer in the invention may be disposed on only one side or on both sides of the dense layer.

• Laminates

The inventive nonwoven fabric laminate for foam molding may be manufactured by stacking the aforementioned dense layer and reinforcing layer together and entangling these layers by needle punching. In the invention, the dense layer and the reinforcing layer are joined together into a laminate by an interlocking treatment through needle punching. In this manner, the dense layer and the reinforcing layer are bonded together with uniform mechanical interlocks. Thus, the inventive nonwoven fabric laminate for foam molding can smoothly follow the shape of a three-dimensional foaming mold while maintaining good denseness throughout the entirety thereof with a reduced probability of the thickness becoming nonuniform due to spreading involved during the following. At the same time, the inventive nonwoven fabric laminate for foam molding maintains appropriate permeability to allow the passage of a gas generated during the expansion of foaming materials such as urethanes as well as to control the impregnation with liquids such as urethanes.

The nonwoven fabric laminate for foam molding according to the invention desirably has a performance that prevents a foaming resin such as urethane from exuding therethrough at the stage of molding a foam. More preferably, the nonwoven fabric laminate has sufficient denseness and also maintains permeability. In the inventive nonwoven fabric laminate for foam molding, the permeability at a pressure difference of 125 Pa is preferably from 20 $cm^3/cm^2/sec$ to less than 160 $cm^3/cm^2/sec$, more preferably from 25 $cm^3/cm^2/sec$ to less than 140 $cm^3/cm^2/sec$, still more preferably from 30 $cm^3/cm^2/sec$ to less than 125 $cm^3/cm^2/sec$, and particularly preferably from 30 $cm^3/cm^2/sec$ to less than 115 $cm^3/cm^2/sec$. This permeability ensures that the nonwoven fabric laminate exhibits a higher performance in the prevention of exudation of foaming resins such as urethanes as well as that the nonwoven fabric laminate allows a gas generated during foam molding to be discharged therethrough favorably. Further, the attainment of this permeability leads to the formation of dense foam layers as a result and is therefore effective for improving the rigidity of foams.

The inventive nonwoven fabric laminate for foam molding usually has a basis weight in the range of 20 to 200 $g/m^2$, preferably 50 to 200 $g/m^2$, more preferably 50 to 160 $g/m^2$, still more preferably 50 to 120 $g/m^2$, and even more preferably 50 to 100 $g/m^2$.

Further, the inventive nonwoven fabric laminate for foam molding has a tensile strength (N/50 mm) of, although not particularly limited to, not less than 50 N/50 mm, and preferably not less than 70 N/50 mm. This tensile strength advantageously ensures excellent reinforcement effects and handleability.

While still achieving the advantageous effects of the invention, the inventive nonwoven fabric laminates for foam molding may be used in foam molding in the form of stacks including additional substrate layers. Specific examples of the additional substrate layers to be stacked with the inventive nonwoven fabric laminates include knitted fabrics, woven fabrics, nonwoven fabrics, films and paper products. The inventive nonwoven fabric laminates and the additional layers may be stacked (bonded) together by any of various known methods including thermal fusion bonding methods such as hot embossing and ultrasonic fusion bonding, mechanical interlocking methods such as needle punching and water jetting, methods using adhesives such as hot melt adhesives and urethane adhesives, and extrusion lamination.

Further, the inventive nonwoven fabric laminate for foam molding may be subjected to secondary processing such as gear processing, printing, coating, lamination, heat treatment or shaping processing while still achieving the object of the invention.

The inventive nonwoven fabric laminate for foam molding has the reinforcing layer on at least one side of the dense layer, the dense layer usually having a higher bulk density than the reinforcing layer. When the reinforcing layer is disposed on only one side of the stack, the laminate may be used such that a foam such as urethane is produced on the reinforcing layer side.

(Urethane foam molding composites)

A urethane foam molding composite according to the present invention includes any of the inventive nonwoven fabric laminates for foam molding described above, and a urethane foam molding joined therewith via the reinforcing layer. The urethane foam molding is usually produced by foam molding a polyurethane in a mold having a desired shape. For example, the urethane foam molding composite of the invention may be manufactured by arranging the inventive nonwoven fabric laminate for foam molding in a mold such as a metal mold so as to conform to a portion such as the top or the bottom of the mold, then pouring a polyurethane material including a foaming agent into the mold, and foam molding the polyurethane material.

According to the invention, the nonwoven fabric laminate for foam molding exhibits excellent conformability to the shape of a mold and can maintain sufficient denseness throughout the entirety thereof even after it is set in conformity to the mold. Thus, the exudation of urethane is prevented, and a urethane foam molding composite can be manufactured in which a polyurethane foam molding is joined to the nonwoven fabric laminate without any exudation of the foam to the surface.

For example, the inventive urethane foam molding composites may be suitably applied to various applications utilizing urethane foams, including vehicle seats in vehicles such as automobiles, trains, airplanes and play equipment, furniture such as chairs and beds, toys and building materials.

By the use of the nonwoven fabric laminates for foam molding according to the invention, the inventive urethane foam molding composites can be manufactured simply by foam molding on the reinforcing materials arranged in molds without entailing complicated steps such as cutting and sewing of the reinforcing materials. When used in combination with metal parts or the like as is the case in applications such as vehicle seats, the inventive urethane foam molding composites provide advantageous effects such as that the occurrence of noise by the friction between the urethane foams and the metal parts can be effectively prevented.

EXAMPLES

The present invention will be described in further detail based on examples hereinbelow without limiting the scope of the invention.

Properties in examples and comparative examples were measured by the following methods.

(1) Basis weight ($g/m^2$)

Ten samples 100 mm in machine direction (MD) and 100 mm in cross direction (CD) were obtained from a nonwoven fabric, and the average of the basis weights thereof was determined.

(2) Thickness (mm)

The thickness was measured at five points, namely, the center and the four corners of the basis weight measurement samples. The average thickness of the 50 points was obtained. The thickness meter applied a load of 2 g/cm$^2$ (load area: 4 cm$^2$).

(3) Bulk density (g/cm$^3$)

The bulk density of the nonwoven fabric was determined from the following equation using the basis weight and the thickness obtained in (1) and (2).

$$\texttt{Bulk density = Basis weight (g/m}^2\texttt{)/(Thickness (mm)/10} \times$$

$$\texttt{100} \times \texttt{100)}$$

(4) Tensile strength (N/50 mm) and elongation (%)

The tensile strength and the elongation were determined in accordance with JIS L1906. Test pieces 300 mm (MD) x 50 mm (CD) were obtained from a nonwoven fabric laminate for foam molding. With use of a tensile tester (AUTOGRAPH AGS-J manufactured by Shimadzu Corporation), the test pieces clamped between chucks 200 mm apart from each other were pulled at a head speed of 100 mm/min. Five test pieces were tested with respect to the machine direction (MD) of the nonwoven fabric, and five test pieces were tested in the cross direction (CD) perpendicular to the length. The average values of tensile strength and elongation were thus obtained.

(5) Permeability (cm$^3$/cm$^2$/sec)

A test piece 200 mm (MD) x 50 mm (CD) was obtained from a nonwoven fabric laminate for foam molding, and was tested with a Frazier permeability tester in accordance with JIS L1096 to determine the flow rate at a pressure difference of 125 Pa.

(6) Shaping properties

A 40 cm square piece of a nonwoven fabric laminate for foam molding was caused to cover a 20 cm square simple mold having a height of 10 cm, and the nonwoven fabric laminate was shaped by being suctioned at 200°C with a vacuum forming machine. Shaping properties were evaluated based on visual inspection and feel (touch) according to the following criteria with respect to items such as the easiness in shaping the nonwoven fabric laminate to the mold, and the shape retention properties and the texture of the shaped nonwoven fabric.
Shaping was feasible and the laminate maintained good appearance and texture required for a reinforcing material: AA
Shaping was feasible and the laminate was acceptable for use as a reinforcing material: A
Shaping was feasible but the laminate had a poor texture for use as a reinforcing material: B
Shaping failed due to problems such as melting: BB

(7) Evaluation of urethane exudation

A nonwoven fabric laminate for foam molding (400 mm (MD) x 400 mm (CD)) was attached to a foaming mold, and the occurrence of urethane exudation was visually evaluated based on the following criteria.

| | |
|---|---|
| No exudation | : AA |
| Substantially no exudation | : A |
| Slight exudation | : B |
| Heavy exudation | : BB |

Here, a polyurethane was used as a resin material and the foaming mold was an automobile seat mold. The foam molding was carried out under usual polyurethane foam molding conditions for the manufacturing of automobile seats.

[Example 1]

A mixture of polyester staple fibers was provided. (The mixture included 30% of sheath/core conjugate fibers including a low-melting-point (110°C) polyester resin (a PET copolymer) and a high-melting-point (250°C) polyester resin (a PET homopolymer) ("MELTY 4080" manufactured by UNITIKA LTD., average fiber diameter 16 μm, average fiber length 51 mm, 2-Component PET in Table 1), and 70% of single fibers including a high-melting-point (250°C) polyester resin (average fiber diameter 16 μm, average fiber length 51 mm, 1-Component PET in Table 1)). The mixed fibers were formed into a nonwoven fabric sheet with a pre-needle punching machine. Thus, a polyester staple fiber nonwoven fabric to serve as a reinforcing layer was obtained.

A commercially available polyester conjugate spunbonded continuous fiber nonwoven fabric ("REEMAY (R-2 series)" manufactured by Fiberweb, circular cross section type) was used as a dense layer. The dense layer was stacked together with the polyester staple fiber nonwoven fabric as the reinforcing layer. These layers were bonded together by interlocking with a needle punching machine to give a nonwoven fabric laminate for foam molding. The properties of the nonwoven fabric laminate for foam molding were measured by the aforementioned methods. The results are described in Table 1.

[Examples 2 to 5]

Nonwoven fabric laminates for foam molding were obtained in the same manner as in Example 1, except that the basis weight of the polyester staple fiber nonwoven fabric as the reinforcing layer and the basis weight of the polyester continuous fiber nonwoven fabric as the dense layer were changed as described in Table 1. The properties of the nonwoven fabric laminates for foam molding were measured by the aforementioned methods. The results are described in Table 1.

[Example 6]

A nonwoven fabric laminate for foam molding was obtained by stacking two layers of the polyester continuous fiber nonwoven fabrics used in Example 3 to form the dense layer and further stacking the dense layer with the polyester staple fiber nonwoven fabric used in Example 1, and bonding these layers by interlocking with a needle punching machine. The properties of the nonwoven fabric laminate for foam molding were measured by the aforementioned methods. The results are described in Table 1.

[Example 7]

A nonwoven fabric laminate for foam molding was obtained in the same manner as in Example 1, except that a polyester conjugate spunbonded continuous fiber nonwoven fabric ("REEMAY (R-0 series)" manufactured by Fiberweb, three-leaves cross section type) was used as the dense layer, and the basis weight was changed as described in Table 1. The properties of the nonwoven fabric laminate for foam molding were measured by the aforementioned methods. The results are described in Table 1.

[Example 8]

A mixture of polyester staple fibers was provided. (The mixture included 50% of sheath/core conjugate fibers including a low-melting-point (110°C) polyester resin (a PET copolymer) and a high-melting-point (250°C) polyester resin (a PET homopolymer) ("MELTY 4080" manufactured by UNITIKA LTD., average fiber diameter 16 μm, average fiber length 51 mm, 2-Component PET in Table 1), and 50% of single fibers including a high-melting-point (250°C) polyester resin (average fiber diameter 16 μm, average fiber length 51 mm, 1-Component PET in Table 1)). The mixed fibers were formed into a nonwoven fabric sheet with a pre-needle punching machine. Thus, a polyester staple fiber nonwoven fabric was obtained. This polyester staple fiber nonwoven fabric was used as the reinforcing layer. A polyester continuous fiber nonwoven fabric which was the same as that used in Example 4 was used as the dense layer. These layers were stacked and bonded together by interlocking with a needle punching machine to give a nonwoven fabric laminate for foam molding. The properties of the nonwoven fabric laminate for foam molding were measured by the aforementioned methods. The results are described in Table 1.

[Comparative Example 1]

A nonwoven fabric laminate for foam molding was obtained in the same manner as in Example 4, except that a polypropylene spunbonded nonwoven fabric having a basis weight of 40 g/m$^2$ and a fiber diameter of 21 μm was used

as the dense layer. The dense layer was melted during shaping and the nonwoven fabric became like a film. As a result, the urethane foaming test was infeasible. The results are described in Table 1.

[Comparative Example 2]

The polyester staple fiber nonwoven fabric produced as the reinforcing layer in Example 1 was subjected to an interlocking treatment by needle punching to give a nonwoven fabric for foam molding. The urethane foaming test resulted in the exudation of the urethane through the nonwoven fabric to the surface, and thus showed that the nonwoven fabric was poor in reinforcing effects and anti-noise properties. The results are described in Table 1.

[Table 1]

Table 1

| | | | Ex. 1 | Ex. 2 | Ex. 3 | Ex. 4 | Ex. 5 | Ex. 6 | Ex. 7 | Ex. 8 | Comp. Ex. 1 | Comp. Ex. 2 |
|---|---|---|---|---|---|---|---|---|---|---|---|---|
| Reinforcing layer | Staple fiber nonwoven fabric | 2-Component PET | 30% | 30% | 30% | 30% | 30% | 30% | 30% | 50% | 30% | 30% |
| | | 1-Component PET | 70% | 70% | 70% | 70% | 70% | 70% | 70% | 50% | 70% | 70% |
| | Basis weight | $g/m^2$ | 140 | 130 | 120 | 100 | 80 | 80 | 140 | 100 | 100 | 140 |
| | Fiber diameter | $\mu m$ | 16 | 16 | 16 | 16 | 16 | 16 | 16 | 16 | 16 | 16 |
| Dense layer | Spunbonded continuous fiber nonwoven fabric | Resin | PET | PET | PET | PET | PET | PET | PET (Three leaves) | PET | PP | - |
| | Number of layers stacked | Layers | 1 | 1 | 1 | 1 | 1 | 2 | 1 | 1 | 1 | - |
| | Basis weight (per layer) | $g/m^2$ | 17 | 25 | 36 | 46 | 100 | 36 | 25 | 46 | 40 | - |
| | Thickness (per layer) | mm | 0.13 | 0.15 | 0.20 | 0.23 | 0.46 | 0.20 | 0.23 | 0.23 | 0.36 | - |
| | Bulk density (per layer) | $g/cm^3$ | 0.13 | 0.17 | 0.18 | 0.20 | 0.22 | 0.18 | 0.11 | 0.20 | 0.11 | - |
| | Fiber diameter | $\mu m$ | 16 | 16 | 16 | 16 | 16 | 16 | 21 | 16 | 21 | - |
| Nonwoven fabric laminate | Basis weight | $g/m^2$ | 162 | 160 | 161 | 150 | 185 | 157 | 170 | 150 | 144 | 142 |
| | Thickness | mm | 2.3 | 2.2 | 2.0 | 1.8 | 2.0 | 1.8 | 2.4 | 1.8 | 2.1 | 2.4 |
| | Tensile strength | MD | N/50 mm | 245 | 236 | 221 | 237 | 297 | 289 | 222 | 228 | 180 | 185 |
| | | CD | N/50 mm | 232 | 215 | 205 | 266 | 268 | 225 | 209 | 259 | 197 | 158 |
| | Elongation | MD | % | 51 | 50 | 53 | 49 | 52 | 54 | 52 | 52 | 70 | 62 |
| | | CD | % | 53 | 55 | 70 | 66 | 78 | 57 | 54 | 70 | 86 | 79 |
| | Permeability | $cm^3/cm^2/sec$ | 113 | 111 | 105 | 107 | 75 | 85 | 110 | 105 | 128 | 148 |
| | Shaping properties | | A | A | A | A | A | A | A | AA | BB | A |
| | Urethane exudation | | A | A | AA | AA | AA | AA | A | AA | - | BB |
| | Total evaluation | | A | A | A | A | A | A | A | A | BB | BB |

INDUSTRIAL APPLICABILITY

The nonwoven fabric laminates for foam molding according to the invention are applicable to the manufacturing of various foams, and may be used as supporting or reinforcing materials for foams of resins such as urethanes and also as functional materials adding properties such as rigidity and anti-noise performance. For example, the inventive nonwoven fabric laminates may be applied to the production of foams in various applications including vehicle seats such as automobile seats, furniture, office chairs and beds.

**Claims**

1. A nonwoven fabric laminate for foam molding comprising
a reinforcing layer on at least one side of a dense layer,
the dense layer being a nonwoven fabric comprising polyester continuous fibers with a fiber diameter of 10 to 30 $\mu$m and having a bulk density of not less than 0.1 g/cm$^3$, the fibers being fusion bonded together by a hot air treatment,
the reinforcing layer being a nonwoven fabric comprising polyester staple fibers with a fiber diameter of 10 to 30 $\mu$m,
the dense layer and the reinforcing layer being interlocked with each other by needle punching.

2. The nonwoven fabric laminate for foam molding according to claim 1, wherein the dense layer is free of partially thermocompression bonded portions.

3. The nonwoven fabric laminate for foam molding according to claim 1, wherein the permeability at a pressure difference of 125 Pa is from 25 cm$^3$/cm$^2$/sec to less than 140 cm$^3$/cm$^2$/sec.

4. The nonwoven fabric laminate for foam molding according to claim 1, wherein the polyester continuous fibers of the dense layer and/or the polyester staple fibers of the reinforcing layer include fibers having cross sectional portions with different melting points.

5. The nonwoven fabric laminate for foam molding according to claim 4, wherein the polyester continuous fibers of the dense layer include conjugate continuous fibers including two or more kinds of resins with different melting points, and at least one of the resins forming the conjugate continuous fibers is a polyester resin.

6. The nonwoven fabric laminate for foam molding according to claim 4, wherein the polyester staple fibers of the reinforcing layer include conjugate staple fibers including two or more kinds of resins with different melting points, and at least one of the resins forming the conjugate staple fibers is a polyester resin.

7. The nonwoven fabric laminate for foam molding according to claim 6, wherein at least one of the resins forming the conjugate staple fibers has a melting point in the range of 110 to 190°C.

8. The nonwoven fabric laminate for foam molding according to claim 1, wherein the basis weight of the dense layer is in the range of 10 to 50 g/m$^2$.

9. The nonwoven fabric laminate for foam molding according to claim 1, wherein the basis weight of the reinforcing layer is in the range of 40 to 150 g/m$^2$.

10. The nonwoven fabric laminate for foam molding according to claim 1, wherein the basis weight of the nonwoven fabric laminate for foam molding is in the range of 50 to 200 g/m$^2$.

11. A urethane foam molding composite comprising the nonwoven fabric laminate for foam molding described in any of claims 1 to 10, and a urethane foam molding joined therewith via the reinforcing layer.

12. A vehicle seat comprising the urethane foam molding composite described in claim 11.

13. A chair comprising the urethane foam molding composite described in claim 11.

14. A method for manufacturing nonwoven fabric laminates for foam molding, comprising
a step of obtaining by a hot air treatment a nonwoven fabric comprising polyester continuous fibers with a fiber diameter of 10 to 30 $\mu$m and having a bulk density of not less than 0.1 g/cm$^3$, and

a step of stacking the nonwoven fabric with a nonwoven fabric comprising polyester staple fibers with a fiber diameter of 10 to 30 $\mu$m, and interlocking these layers with each other by needle punching.

15. The method for manufacturing nonwoven fabric laminates for foam molding according to claim 14, wherein the polyester continuous fibers include conjugate continuous fibers including two or more kinds of resins with different melting points, and at least one of the resins forming the conjugate continuous fibers is a polyester resin.

## INTERNATIONAL SEARCH REPORT

| International application No. |
|---|
| PCT/JP2013/064204 |

### A. CLASSIFICATION OF SUBJECT MATTER
*D04H1/4374*(2012.01)i, *A47C7/20*(2006.01)i, *B32B5/26*(2006.01)i, *B32B27/36*(2006.01)i, *B60N2/44*(2006.01)i, *D04H1/435*(2012.01)i, *D04H1/498*(2012.01)i, *D04H3/011*(2012.01)i

According to International Patent Classification (IPC) or to both national classification and IPC

### B. FIELDS SEARCHED

Minimum documentation searched (classification system followed by classification symbols)
D04H1/00-18/04, A47C7/00-7/74, B32B1/00-43/00, B60N2/00-2/72

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
Thomson Innovation

### C. DOCUMENTS CONSIDERED TO BE RELEVANT

| Category* | Citation of document, with indication, where appropriate, of the relevant passages | Relevant to claim No. |
|---|---|---|
| A | JP 2005-288873 A (Nippon Petrochemicals Co., Ltd.), 20 October 2005 (20.10.2005), claim 1; paragraphs [0001], [0027], [0048]; examples (Family: none) | 1-15 |
| A | JP 8-142245 A (Matsushita Electric Works, Ltd.), 04 June 1996 (04.06.1996), claim 1; paragraphs [0001], [0013]; examples (Family: none) | 1-15 |
| A | JP 2005-212204 A (Daiwabo Co., Ltd.), 11 August 2005 (11.08.2005), claim 1; paragraph [0001]; examples (Family: none) | 1-15 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 August, 2013 (19.08.13) | 27 August, 2013 (27.08.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 853 628 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S6226193 Y
- JP H02258332 A
- JP 2004353153 A
- JP 2007146356 A
- JP 2005212202 A
- JP 2006281768 A
- JP 2010174393 A
- US 3384944 A
- US 3989788 A
- JP 2010537068 A